# EUROPEAN PATENT APPLICATION

(11) **EP 4 624 032 A1**
(43) Date of publication of application: **01.10.2025**
(21) Application number: 25159101.2
(22) Date of filing: 20.02.2025
(51) Int. Cl.: B01F 33/30, B01L 3/00, B01F 31/31, B01F 101/23

(54) **MICROCHANNEL SLIDE, ASSOCIATED SYSTEM, AND ASSOCIATED METHOD**

(30) Priority: 27.03.2024 IN 202411024455
(71) Applicant: Honeywell International Inc., Charlotte, NC 28202 (US)
(72) Inventor: UTKARSH, Debendra, Charlotte, 28202 (US); PATTAR, Manjunath, Charlotte, 28202 (US); HM, Manjunatha, Charlotte, 28202 (US)
(74) Representative: Haseltine Lake Kempner LLP

(57) **Abstract**

A microchannel slide system is provided. For example, a microchannel slide system comprises a microchannel slide (100) comprising a main body (102), two or more flow channels (104), a mixing chamber (108), a selectively actuated vibrator (122) positioned within or adjacent to the mixing chamber, an imaging chamber (112), and a mixing chamber release valve positioned between the mixing chamber and the imaging chamber. Each flow channel receives a corresponding flow of a liquid. The mixing chamber receives the flows of the liquid from the flow channels. The vibrator, when actuated, mixes the received flows of the liquid to create a mixed liquid. The imaging chamber receives the mixed liquid from the mixing chamber. The mixing chamber release valve selectively allows the mixed liquid to flow from the mixing chamber to the imaging chamber. A depth of the imaging chamber is selected to enable imaging of the mixed liquid in the imaging chamber.

## Description

### FIELD OF THE INVENTION

Embodiments of the present disclosure generally relate to imaging systems, and, more particularly, to microchannel slides used with imaging systems.

### BACKGROUND

Cell imaging uses different technologies like flow cytometry, digital holography, ultraviolet (UV) digital imaging, etc. These technologies generally need some container to hold the cells during imaging, such as microchannel flow slides, wells, microchips, microfluidics, etc.

For consistent and reliable digital imaging of such samples, it is often necessary to properly mix the samples prior to imaging. Mixing helps to avoid uneven distribution, clumps, or air bubbles that can compromise the integrity of the samples, thereby improving reproducibility. By properly mixing the sample, the sample representativeness is maintained which is a necessary step prior to testing.

In many applications, such sample mixing is a manual and cumbersome process, with high variability. This is especially true in white blood cell (WBC) cytometry where there may be only a slight distinction between mixed and non-mixed samples and any distinction there may be (e.g., color, turbidity, etc.) may not be appreciable in the low sampling volumes (e.g., microliters).

As such, such cell imaging modalities are plagued by technical challenges and limitations. Through applied effort, ingenuity, and innovation, many of these identified problems have been solved by developing solutions that are included in embodiments of the present disclosure, many examples of which are described in detail herein.

### BRIEF SUMMARY

Various embodiments described herein relate to microchannel slides, microchannel slide systems, and associated methods of preparing a liquid for imaging.

In accordance with various embodiments of the present disclosure, a microchannel slide system is provided. In some embodiments, a microchannel slide system comprises a microchannel slide. The microchannel slide comprises a main body, two or more flow channels defined in the main body, a mixing chamber defined in the main body, a selectively actuated vibrator positioned within or adjacent to the mixing chamber, an imaging chamber defined in the main body, and a mixing chamber release valve positioned between the mixing chamber and the imaging chamber. Each flow channel is adapted to receive a corresponding flow of a liquid. The mixing chamber is in fluid connection with the flow channels and adapted to receive the flows of the liquid from the flow channels. The selectively actuated vibrator is adapted to, when actuated, mix the received flows of the liquid to create a mixed liquid. The imaging chamber is in fluid connection with the mixing chamber and adapted to receive the mixed liquid from the mixing chamber. The mixing chamber release valve is adapted to selectively allow the mixed liquid to flow from the mixing chamber to the imaging chamber. A depth of the imaging chamber is selected to enable imaging of the mixed liquid in the imaging chamber.

In some embodiments, the two or more flow channels comprise three flow channels.

In some embodiments, the flow channels, the mixing chamber, and the imaging chamber are all open to a top surface of the main body, and the microchannel slide further comprises a transparent coverslip on the top surface of the main body.

In some embodiments, the microchannel slide further comprises a flexible diaphragm positioned across a bottom open end of the mixing chamber, and the vibrator is affixed to a side of the flexible diaphragm opposite the mixing chamber.

In some embodiments, the vibrator comprises a piezoelectric vibrator.

In some embodiments, the mixing chamber release valve comprises a solenoid valve.

In some embodiments, the microchannel slide system further comprises a liquid collection bag. The liquid collection bag comprises a main portion defining a liquid collection chamber adapted to receive the liquid from an external source, an input line adapted to convey the liquid from the external source into the liquid collection chamber of the liquid collection bag, and two or more output lines. Each output line is adapted to convey the liquid from a respective different location within the liquid collection chamber to a respective one of the flow channels of the microchannel slide.

In some embodiments, the liquid collection bag further comprises a pressure sensor adapted to detect a pressure of the liquid within the liquid collection chamber.

In some embodiments, the microchannel slide system further comprises a liquid collection bag release valve positioned between the liquid collection bag and the microchannel slide and adapted to selectively allow the liquid to flow from the liquid collection bag to the microchannel slide.

In some embodiments, the microchannel slide system further comprises a controller configured to (i) selectively open the liquid collection bag release valve to allow the liquid to flow from the liquid collection bag to the microchannel slide, (ii) selectively actuate the vibrator to mix the received flows of the liquid to create the mixed liquid, and (iii) selectively open the mixing chamber release valve to allow the mixed liquid to flow from the mixing chamber to the imaging chamber.

In some embodiments, the controller is configured to selectively actuate the vibrator for a predetermined amount of time.

In some embodiments, the controller is configured to selectively open the mixing chamber release valve after the vibrator has been actuated for the predetermined amount of time.

In some embodiments, the controller is configured to receive an indication of the pressure of the liquid within the liquid collection chamber from the pressure sensor and the controller is configured to selectively open the liquid collection bag release valve to allow the liquid to flow from the liquid collection bag to the microchannel slide when the pressure of the liquid within the liquid collection chamber reaches a predetermined threshold.

In some embodiments, the external source is an abdomen of a peritoneal dialysis patient and the liquid is a waste dialysate.

In accordance with various embodiments of the present disclosure, a method of preparing a liquid for imaging is provided. In some embodiments, the method comprises receiving a liquid into a liquid collection bag from an external source; opening a liquid collection bag release valve to allow respective flows of the liquid to flow (i) out of the liquid collection bag via two or more output lines, (ii) into respective ones of two or more flow channels defined in a main body of a microchannel slide, and (iii) into a mixing chamber defined in the main body of the microchannel slide, each output line adapted to convey a corresponding flow of the liquid from a respective different location within the liquid collection chamber; actuating a vibrator positioned within or adjacent to the mixing chamber to mix the liquid in the mixing chamber to create a mixed liquid; and opening a mixing chamber release valve to allow the mixed liquid to flow from the mixing chamber to an imaging chamber defined in the main body of the microchannel slide. A depth of the imaging chamber is selected to enable imaging of the mixed liquid in the imaging chamber.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is a top perspective view of an example microchannel slide in accordance with example embodiments of the present disclosure;
FIG. 2 is a bottom perspective view of the example microchannel slide of FIG. 1;
FIG. 3 is a top view of the example microchannel slide of FIG. 1;
FIG. 4 is an exploded perspective view of the example microchannel slide of FIG. 1;
FIG. 5 is a sectional view of the example microchannel slide of FIG. 1, along line 5-5 of FIG. 3;
FIG. 6 is a front view of an example liquid collection bag to be used with an example microchannel slide in accordance with example embodiments of the present disclosure;
FIG. 7 is a block diagram of various components of an example microchannel slide system in accordance with example embodiments of the present disclosure; and
FIG. 8 is a flowchart illustrating an example method of preparing a liquid for imaging in accordance with example embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

The term "fluidly coupled," "fluidly coupling," "fluidly couple," "in fluid communication with," "in fluid connection with," or "fluidly connected" in the present disclosure refers to two or more elements or components being connected, directly or indirectly, such that a fluid may flow, directly or indirectly, between the two or more elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

Patients with reduced kidney function or in kidney failure need a medical procedure to remove waste products from the patient's blood. This procedure is called dialysis, which may be hemodialysis or peritoneal dialysis. During peritoneal dialysis, a cleansing liquid called a dialysate passes through a catheter tube into part of the patient's abdomen known as the peritoneal cavity. The dialysate absorbs waste products from blood vessels in the lining of the abdomen, called the peritoneum. After sufficient time has passed (the time the dialysate is left in the patient's abdomen is termed "dwell time"), the liquid is drawn back out of the body into a waste collection bag and discarded. Prior to discarding the waste dialysate, a small sample of the waste dialysate is removed from the waste collection bag and tested (e.g., to determine levels of urea and creatinine in the waste dialysate). Prior to removing the sample from the waste collection bag, the waste collection bag must be agitated to ensure that the waste dialysate is well mixed such that the sample drawn out is representative of the contents of the waste collection bag. This agitation is needed as the waste dialysate can become stratified as heavier components of the waste dialysate settle during the dwell time.

Various embodiments of the present disclosure overcome the above technical challenges and difficulties and provide various technical improvements and advantages. For example, various embodiments of the present disclosure provide an example microchannel slide. Various embodiments of the present disclosure provide an example microchannel slide system. Various embodiments of the present disclosure provide an example method of preparing a liquid for imaging.

In various embodiments of the present disclosure, a microchannel slide is provided that can receive two or more separate flows of a liquid to be imaged (e.g., waste dialysate) and mix the two separate flows to obtain a representative mixture suitable for imaging. In various embodiments, the microchannel slide comprises two or more flow channels that receive the two or more separate flows of the liquid to be imaged from different parts of a liquid collection bag.

In various embodiments, the microchannel slide comprises a mixing chamber that receives the flows of the liquid from the flow channels. In various embodiments, the microchannel slide comprises a selectively actuated vibrator positioned within or adjacent to the mixing chamber that, when actuated, mixes the received flows of the liquid.

In various embodiments, the microchannel slide comprises an imaging chamber in fluid connection with the mixing chamber to receive the mixed liquid from the mixing chamber for imaging.

In various embodiments of the present disclosure, a microchannel slide system comprises a microchannel slide and a liquid collection bag. In various embodiments, the liquid collection bag has two or more output lines that each convey the liquid within the bag from a respective different location within the liquid collection bag to a respective one of the flow channels of the microchannel slide.

While embodiments of the present disclosure are described herein for sampling and analyzing waste dialysate from peritoneal dialysis, various embodiments of the present disclosure can be used for sampling any biological fluid that is collected in flexible bag and then analyzed using an imaging system.

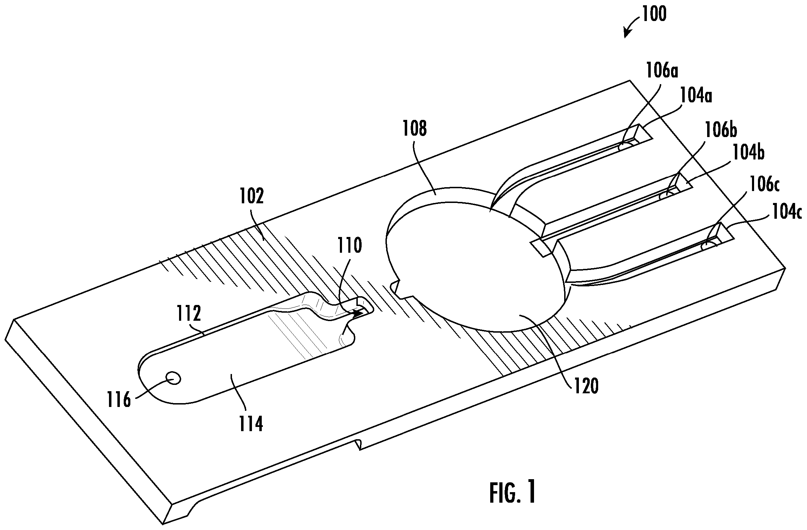

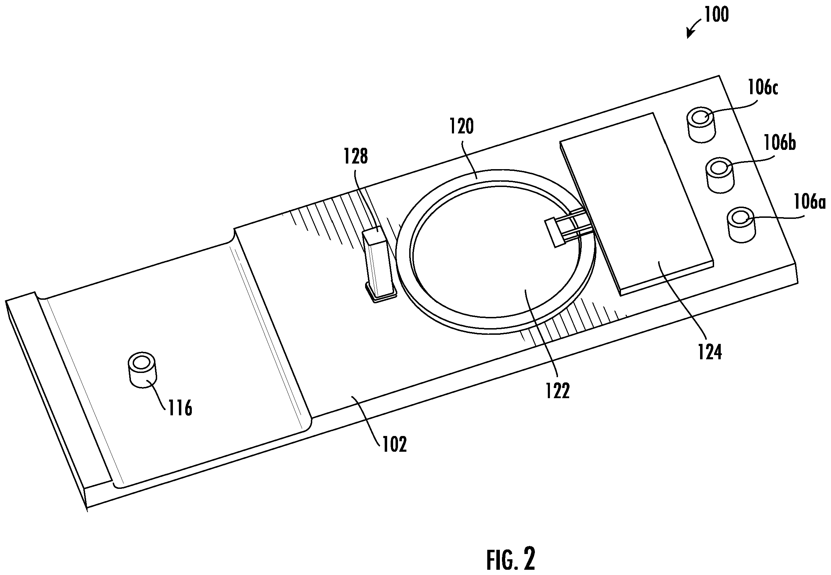

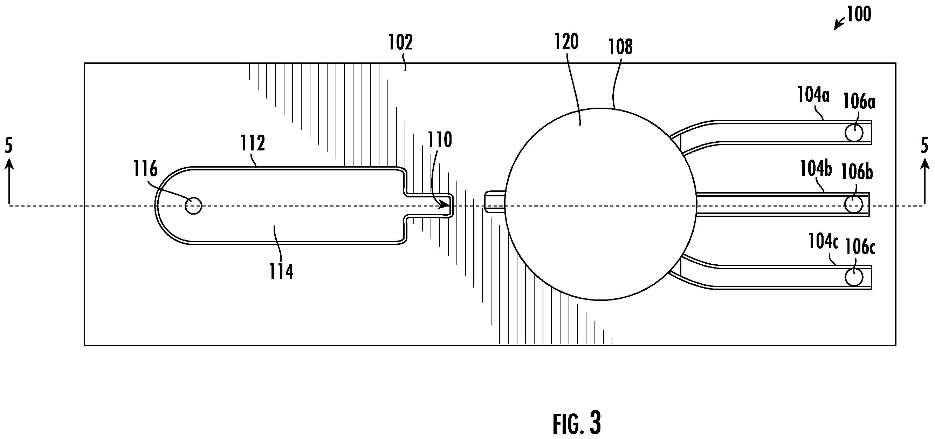

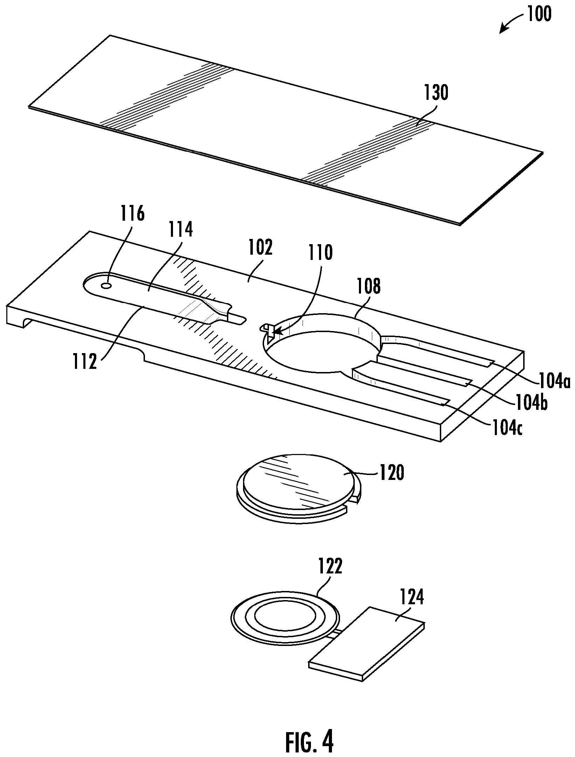

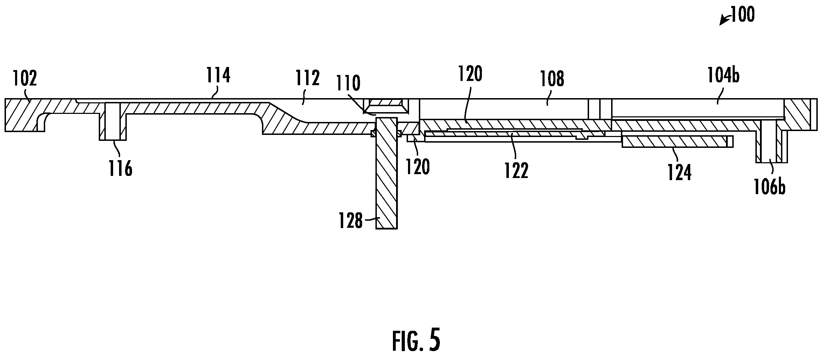

Referring now to FIGS. 1-5, an example microchannel slide is illustrated in accordance with example embodiments of the present disclosure. The microchannel slide 100 of FIGS. 1-5 comprises a main body 102 having a generally rectangular prism shape, although any suitable shape may be used. In various embodiments, the main body may be constructed of any suitable material, such as any suitable plastic. In the illustrated embodiment, three flow channels 104a-c are defined in the main body 102, although any suitable number of flow channels may be defined. Each of the flow channels 104a-c receives a separate respective flow of a liquid to be mixed and imaged, such as waste dialysate. A respective input port 106a-c is defined at a proximal end of each of the flow channels 104a-c. Each of the input ports 106a-c provides an entry for a separate flow of the liquid into a respective flow channel 104a-c.

In the illustrated embodiment, a mixing chamber 108 is defined in the main body 102. The mixing chamber 108 has a generally cylindrical shape, although any suitable shape may be used. As seen in FIGS. 1-5, a distal end of each of the flow channels 104a-c opens into the mixing chamber 108 such that the separate flows of the liquid travel from the flow channels 104a-c into the mixing chamber 108.

In the illustrated embodiment, a selectively actuated vibrator 122 is positioned adjacent to the mixing chamber 108. In various embodiments, when actuated, the vibrator 122 mixes the received flows of the liquid in the mixing chamber 108 to create a mixed liquid. In some embodiments, the vibrator comprises a piezoelectric vibrator although any suitable vibrating mechanism may be used. In the illustrated embodiment, a control board 124 is electrically connected to the vibrator 122 to provide a drive signal to the vibrator 122. In various embodiments, the vibrator may be vibrated at any suitable frequency, amplitude, and/or duration.

In the illustrated embodiment, a flexible diaphragm 120 is positioned across a bottom open end of the mixing chamber 108, and the vibrator 122 is affixed to a side of the flexible diaphragm 120 opposite the mixing chamber 108. The flexible diaphragm 120 is secured to the main body 102 using any suitable mechanism, such as any suitable adhesive. In this regard, the flexible diaphragm 120 seals the bottom end of the mixing chamber 108 to prevent the liquid from inadvertently escaping from the mixing chamber.

In the illustrated embodiment, an imaging chamber 112 is in fluid connection with the mixing chamber 108 and receives the mixed liquid from the mixing chamber 108 for imaging. In the illustrated embodiment, a channel 110 between the mixing chamber 108 and the imaging chamber 112 provides the fluid connection. A mixing chamber release valve (only the plunger 128 of which is illustrated) is selectively closed to hold the liquid in the mixing chamber 108 during the mixing process and is selectively opened to enable the liquid in the mixing chamber 108 to flow to the imaging chamber 112 after the mixing process is complete. In some embodiments, the mixing chamber release valve comprises a solenoid valve (in which case, the plunger 128 is selectively longitudinally moved between its closed position and its open position by the application and removal of a drive voltage).

In the illustrated embodiment, the imaging chamber comprises a shallow portion 114 in which the mixed liquid collects for imaging as the microchannel slide 100 is typically (but not necessarily) positioned vertically on end in an imaging device such that the end of the microchannel slide 100 with the input ports 106a-c is on top and the end of the microchannel slide 100 with the imaging chamber 112 is on bottom. The depth of the imaging chamber 112 is selected to enable imaging of the mixed liquid in the imaging chamber. In one example embodiment, the depth of the shallow portion of the imaging chamber is about 0.2 millimeters (mm). In the illustrated embodiment, a drain 116 is defined in the shallow portion 114 of the imaging chamber 112 to enable the mixed liquid to drain from the microchannel slide 100 when the imaging is complete. Although not illustrated, a valve may be present to selectively prevent or allow the mixed liquid to drain from the microchannel slide.

In the illustrated embodiment, the flow channels 104a-c, the mixing chamber 108, and the imaging chamber 112 are all open to a top surface of the main body 102 and a transparent coverslip 130 is secured to the top surface of the main body 102 to prevent the liquid from inadvertently escaping from the flow channels 104a-c, the mixing chamber 108, and the imaging chamber 112 while allowing visibility of the contents of the flow channels 104a-c, the mixing chamber 108, and the imaging chamber 112. The transparent coverslip 130 may be secured to the main body 102 in any suitable manner. The transparent coverslip 130 may be constructed of any suitable material of high optical efficiency, such as a very thin glass or polymer material. The transparent coverslip 130 is omitted from FIGS. 1-3 and 5 for simplicity.

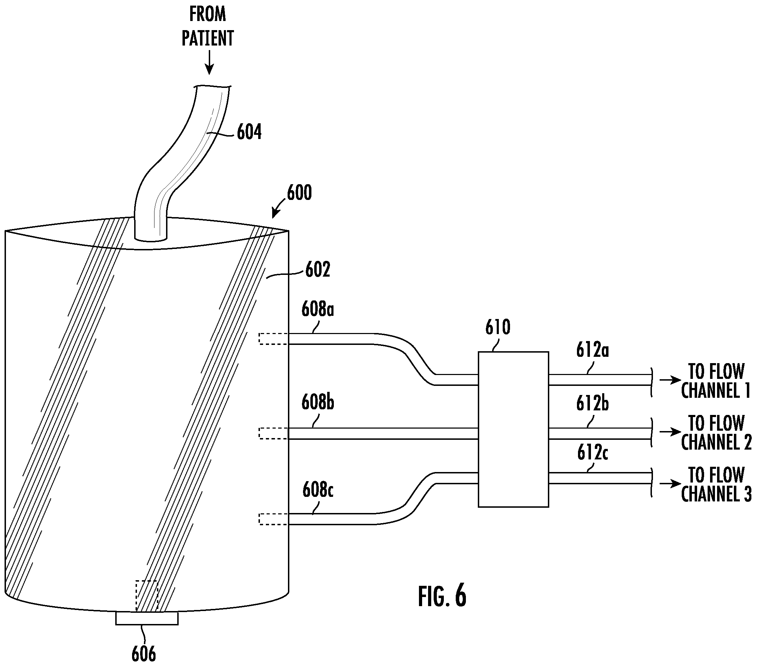

Referring now to FIG. 6, an example liquid collection bag (which may also be termed a liquid waste collection bag or the like) that may be used with a microchannel slide as described herein (or any other suitable device) is illustrated in accordance with example embodiments of the present disclosure. In the illustrated embodiment, a liquid collection bag 600 has a main portion 602 forming a liquid collection chamber to receive a liquid (such as a waste dialysate) from an external source (such as the peritoneum of a patient undergoing peritoneal dialysis) via an input tube or line 604. While the liquid is draining into the liquid collection bag 600, the liquid collection bag 600 will typically be suspended in an upright position via one or more hooks or the like (not illustrated).

In the illustrated embodiment, a liquid collection bag 600 has three output tubes or lines 608a-c that each convey the liquid from a respective different location within the liquid collection bag 600 to a respective one of the flow channels 104a-c of the microchannel slide 100. In various embodiments, any suitable number of output lines may be present to convey the liquid within the liquid collection bag to a same number of flow channels. As illustrated, output line 608a conveys liquid from about the top third of the liquid collection chamber of the liquid collection bag 600, output line 608b conveys liquid from about the middle third of the liquid collection chamber of the liquid collection bag 600, and output line 608c conveys liquid from about the bottom third of the liquid collection chamber of the liquid collection bag 600. In this regard, a suitable representative sample of the liquid may be taken without having to agitate the liquid in the liquid collection bag since the mixing of the liquid will occur in the mixing chamber of the microchannel slide.

In the illustrated embodiment, the liquid collection bag 600 includes a pressure sensor 606 mounted at the bottom of the liquid collection bag 600 with a portion projecting into the liquid collection chamber of the liquid collection bag 600 to detect a pressure of the liquid within the liquid collection chamber as the liquid collection bag 600 fills. Any suitable pressure sensor may be used. In various embodiments, as described further below, the pressure reading from the pressure sensor 606 is used to determine when the liquid collection bag 600 is full enough to extract a sample of the waste liquid for imaging. In various embodiments, the desired pressure is determined based on the type of treatment the patient is having. For example, in peritoneal dialysis a patient will typically be given 2-3 liters of a fluid dialysate during the process and the drain bag will have about 2.5-3.5 liters (i.e., somewhat more than the amount of fluid given due to peritoneal process inside the abdomen). In such an example treatment, the weight of the drain bag at a filled state would be around 2.0-3.5 kilograms and, accordingly the gage pressure sensor would be about 70-110 bar (depending on the port area and design, type of sensor, etc.). Based on the sensed value of the pressure, in various embodiments the percentage of fill inside the drain bag can be determined (after calibrating for the specific treatment process).

The three output tubes or lines 608a-c are in fluid connection with a liquid collection bag release valve 610, which in turn is in fluid connection with three liquid transfer tubes or lines 612a-c, which in turn are in fluid connection with respective ones of the flow channels 104a-c. In various embodiments, the liquid collection bag release valve 610 controls the flow of the waste liquid from the liquid collection bag 600 to the microchannel slide 100. In various embodiments, the liquid collection bag release valve 610 simultaneously controls the flow of the waste liquid from the liquid collection bag 600 to each of the flow channels 104a-c of the microchannel slide 100 so that about the same amount of liquid flows to each of the flow channels 104a-c.

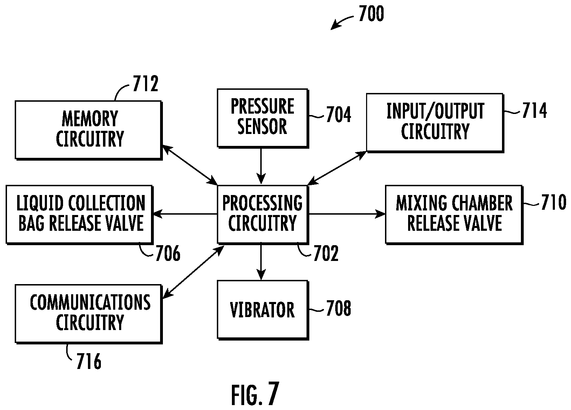

Referring now to FIG. 7, a block diagram of various components of an example microchannel slide system is provided. In various embodiments, one or more of the components shown in FIG. 7 may also interface with and control various components of a peritoneal dialysis machine, such as, for example, a heater, a pump, and a scale. As depicted in FIG. 7, in some embodiments the example microchannel slide system 700 comprises a processor or processing circuitry 702, memory circuitry 712, input/output circuitry 714, communications circuitry 716, a pressure sensor 704, a liquid collection bag release valve 706, a vibrator 708, and a mixing chamber release valve 710. In some embodiments, one or more portions of the example microchannel slide system 700 are configured to execute and perform the operations described herein.

Although components are described with respect to functional limitations, it should be understood that at least some of the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

Processing circuitry 702 may be embodied in a number of different ways. In various embodiments, the use of the terms "processor" or "processing circuitry" should be understood to include a single core processor, a multi-core processor, multiple processors internal to the example microchannel slide system 700, and/or one or more remote or "cloud" processor(s) external to the example microchannel slide system 700. In some example embodiments, processing circuitry 702 may include one or more processing devices configured to perform independently. Alternatively, or additionally, processing circuitry 702 may include one or more processor(s) configured in tandem via a bus to enable independent execution of operations, instructions, pipelining, and/or multithreading.

In an example embodiment, the processing circuitry 702 may be configured to execute instructions stored in the memory circuitry 712 or otherwise accessible to the processor. Alternatively, or additionally, the processing circuitry 702 may be configured to execute hard-coded functionality. As such, whether configured by hardware or software methods, or by a combination thereof, processing circuitry 702 may represent an entity (e.g., physically embodied in circuitry) capable of performing operations according to embodiments of the present disclosure while configured accordingly. Alternatively, or additionally, processing circuitry 702 may be embodied as an executor of software instructions, and the instructions may specifically configure the processing circuitry 702 to perform the various algorithms embodied in one or more operations described herein when such instructions are executed. In some embodiments, the processing circuitry 702 includes hardware, software, firmware, and/or a combination thereof that performs one or more operations described herein.

In some embodiments, the processing circuitry 702 (and/or co-processor or any other processing circuitry assisting or otherwise associated with the processor) is/are in communication with the memory circuitry 712 via a bus for passing information among components of the example microchannel slide system 700.

Memory or memory circuitry 712 may be non-transitory and may include, for example, one or more volatile and/or non-volatile memories. In some embodiments, the memory circuitry 712 includes or embodies an electronic storage device (e.g., a computer readable storage medium). In some embodiments, the memory circuitry 712 is configured to store information, data, content, applications, instructions, or the like, for enabling the example microchannel slide system 700 to carry out various operations and/or functions in accordance with example embodiments of the present disclosure.

Input/output circuitry 714 may be included in the example microchannel slide system 700. In some embodiments, input/output circuitry 714 may provide output to the user and/or receive input from a user. The input/output circuitry 714 may be in communication with the processing circuitry 702 to provide such functionality. The input/output circuitry 714 may comprise one or more user interface(s). In some embodiments, a user interface may include a display that comprises the interface(s) rendered as a web user interface, an application user interface, a user device, a backend system, or the like. In some embodiments, the input/output circuitry 714 also includes a keyboard, a mouse, a joystick, a touch screen, touch areas, soft keys a microphone, a speaker, or other input/output mechanisms. The processing circuitry 702 and/or input/output circuitry 714 may be configured to control one or more operations and/or functions of one or more user interface elements through computer program instructions (e.g., software and/or firmware) stored on a memory accessible to the processor (e.g., memory circuitry 712, and/or the like). In some embodiments, the input/output circuitry 714 includes or utilizes a user-facing application to provide input/output functionality to a computing device and/or other display associated with a user.

Communications circuitry 716 may be included in the example microchannel slide system 700. The communications circuitry 716 may include any means such as a device or circuitry embodied in either hardware or a combination of hardware and software that is configured to receive and/or transmit data from/to a network and/or any other device, circuitry, or module in communication with the example microchannel slide system 700. In some embodiments the communications circuitry 716 includes, for example, a network interface for enabling communications with a wired or wireless communications network. Additionally or alternatively, the communications circuitry 716 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 716 may include circuitry for interacting with an antenna(s) and/or other hardware or software to cause transmission of signals via the antenna(s) and/or to handle receipt of signals received via the antenna(s). In some embodiments, the communications circuitry 716 enables transmission to and/or receipt of data from a user device, one or more sensors, and/or other external computing device(s) in communication with the example microchannel slide system 700.

A pressure sensor 704, as described above, may be included in the example microchannel slide system 700 and controlled by the processing circuitry 702. A liquid collection bag release valve 706, as described above, may be included in the example microchannel slide system 700 and controlled by the processing circuitry 702. A vibrator 708, as described above, may be included in the example microchannel slide system 700 and controlled by the processing circuitry 702. A mixing chamber release valve 710, as described above, may be included in the example microchannel slide system 700 and controlled by the processing circuitry 702.

In some embodiments, two or more of the sets of circuitry 702, 712-716 are combinable. Alternatively, or additionally, one or more of the sets of circuitry 702, 712-716 perform some or all of the operations and/or functionality described herein as being associated with another circuitry. In some embodiments, two or more of the sets of circuitry 702, 712-716 are combined into a single module embodied in hardware, software, firmware, and/or a combination thereof.

While the description above provides an example microchannel slide system 700, it is noted that the scope of the present disclosure is not limited to the description above. In some examples, an example microchannel slide system 700 in accordance with the present disclosure may be in other forms. In some examples, an example microchannel slide system 700 may comprise one or more additional and/or alternative elements, and/or may be structured differently than that illustrated in FIG. 7.

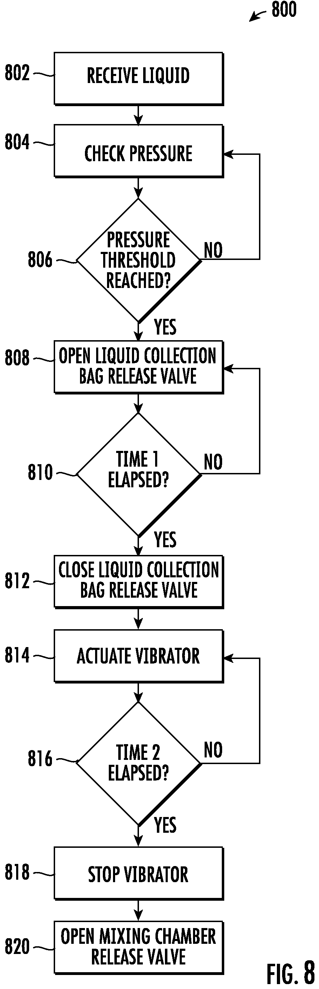

Reference will now be made to FIG. 8 which provides a flowchart illustrating example steps, processes, procedures, and/or operations in accordance with various embodiments of the present disclosure. Various methods described herein, including, for example, methods as shown in FIG. 8, may provide various technical benefits and improvements.

In various embodiments, the example method comprises a method for preparing a liquid for imaging. The example method for preparing a liquid for imaging may be performed as a waste liquid is being collected in a liquid collection bag.

In various embodiments, an example method checks the pressure within the liquid collection bag to determine when the liquid collection bag is sufficiently full to take a sample of the liquid from the liquid collection bag, opens a liquid collection bag release valve to release some of the liquid from multiple levels within the liquid collection bag to a microchannel slide and then closes the liquid collection bag release valve, actuates a vibrator to mix the liquid that has entered a mixing chamber of the microchamber slide, then opens a mixing chamber release valve to release the mixed liquid from the mixing chamber into an imaging chamber of the microchannel slide.

Referring now to FIG. 8, an example method 800 is illustrated. The example method begins at step/operation 802. At step/operation 804, a liquid collection bag (such as, but not limited to, the liquid collection bag 600 described above in connection with FIG. 6) receives a liquid (such as, but not limited to, waste dialysate from the peritoneum of a patient undergoing peritoneal dialysis).

At step/operation 804, a processor (such as, but not limited to, the processing circuitry 702, in conjunction with the pressure sensor 704, of the example microchannel slide system 700 described above in connection with FIG. 7) determines the pressure within the liquid collection bag to determine if the liquid collection bag is sufficiently full to take a sample of the liquid from the liquid collection bag.

At step/operation 806, a processor (such as, but not limited to, the processing circuitry 702 of the example microchannel slide system 700 described above in connection with FIG. 7) determines if the pressure within the liquid collection bag has reached a predetermined threshold that is indicative of the liquid collection bag being sufficiently full to take a sample of the liquid from the liquid collection bag.

If it is determined at step/operation 806 that the pressure within the liquid collection bag has not reached the predetermined threshold, the example method 800 will repeat steps/operations 804 and 806. If it is determined at step/operation 806 that the pressure within the liquid has reached the predetermined threshold, the example method 800 will proceed to step/operation 808.

At step/operation 808, a processor (such as, but not limited to, the processing circuitry 702 of the example microchannel slide system 700 described above in connection with FIG. 7) opens a liquid collection bag release valve (such as, but not limited to, the liquid collection bag release valve 706 of the example microchannel slide system 700 described above in connection with FIG. 7) to release some of the liquid from multiple levels within the liquid collection bag to a microchannel slide.

At step/operation 810, a processor (such as, but not limited to, the processing circuitry 702 of the example microchannel slide system 700 described above in connection with FIG. 7) determines if a predetermined amount of time has lapsed. In various embodiments, the predetermined amount of time corresponds to an amount of time needed for a sufficient amount of the liquid within the liquid collection bag to travel from the liquid collection bag to the microchannel slide.

If it is determined at step/operation 810 that the predetermined amount of time has not elapsed, the example method 800 will repeat step/operation 810. If it is determined at step/operation 810 that the predetermined amount of time has elapsed, the example method 800 will proceed to step/operation 812.

At step/operation 812, a processor (such as, but not limited to, the processing circuitry 702 of the example microchannel slide system 700 described above in connection with FIG. 7) closes the collection bag release valve.

At step/operation 814, a processor (such as, but not limited to, the processing circuitry 702 of the example microchannel slide system 700 described above in connection with FIG. 7) actuates a vibrator (such as, but not limited to, the vibrator 708 of the example microchannel slide system 700 described above in connection with FIG. 7) to mix the liquid that has entered a mixing chamber of the microchamber slide.

At step/operation 816, a processor (such as, but not limited to, the processing circuitry 702 of the example microchannel slide system 700 described above in connection with FIG. 7) determines if a predetermined amount of time has lapsed. In various embodiments, the predetermined amount of time corresponds to an amount of time needed to sufficiently mix the liquid in the mixing chamber of the microchamber slide.

If it is determined at step/operation 816 that the predetermined amount of time has not elapsed, the example method 800 will repeat steps/operations 814 and 816. If it is determined at step/operation 816 that the predetermined amount of time has elapsed, the example method 800 will proceed to step/operation 818.

At step/operation 818, a processor (such as, but not limited to, the processing circuitry 702 of the example microchannel slide system 700 described above in connection with FIG. 7) stops the vibrator.

At step/operation 820, a processor (such as, but not limited to, the processing circuitry 702 of the example microchannel slide system 700 described above in connection with FIG. 7) opens a mixing chamber release valve (such as, but not limited to, the mixing chamber release valve 710 of the example microchannel slide system 700 described above in connection with FIG. 7) to release some of the liquid from the mixing chamber into an imaging chamber of the microchannel slide.

After step/operation 820, the microchannel slide may be placed into an imaging device to image the liquid in the imaging chamber. In some embodiments, the example method 800 is performed once and begins as a waste liquid is being collected in a liquid collection bag.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A microchannel slide system comprising:
a microchannel slide comprising:
a main body;
two or more flow channels defined in the main body, each flow channel adapted to receive a corresponding flow of a liquid;
a mixing chamber defined in the main body, the mixing chamber in fluid connection with the flow channels and adapted to receive the flows of the liquid from the flow channels;
a selectively actuated vibrator positioned within or adjacent to the mixing chamber and adapted to, when actuated, mix the received flows of the liquid to create a mixed liquid;
an imaging chamber defined in the main body, the imaging chamber in fluid connection with the mixing chamber and adapted to receive the mixed liquid from the mixing chamber; and
a mixing chamber release valve positioned between the mixing chamber and the imaging chamber and adapted to selectively allow the mixed liquid to flow from the mixing chamber to the imaging chamber;
wherein a depth of the imaging chamber is selected to enable imaging of the mixed liquid in the imaging chamber.

2. The microchannel slide system of claim 1, wherein the two or more flow channels comprise three flow channels.

3. The microchannel slide system of claim 1, wherein the flow channels, the mixing chamber, and the imaging chamber are all open to a top surface of the main body; and
wherein the microchannel slide further comprises a transparent coverslip on the top surface of the main body.

4. The microchannel slide system of claim 1, wherein the microchannel slide further comprises a flexible diaphragm positioned across a bottom open end of the mixing chamber; and
wherein the vibrator is affixed to a side of the flexible diaphragm opposite the mixing chamber.

5. The microchannel slide system of claim 1, wherein the vibrator comprises a piezoelectric vibrator.

6. The microchannel slide system of claim 1, wherein the mixing chamber release valve comprises a solenoid valve.

7. The microchannel slide system of claim 1, further comprising:
a liquid collection bag comprising:
a main portion defining a liquid collection chamber adapted to receive the liquid from an external source;
an input line adapted to convey the liquid from the external source into the liquid collection chamber of the liquid collection bag; and
two or more output lines, each output line adapted to convey the liquid from a respective different location within the liquid collection chamber to a respective one of the flow channels of the microchannel slide.

8. The microchannel slide system of claim 7, wherein the liquid collection bag further comprises a pressure sensor adapted to detect a pressure of the liquid within the liquid collection chamber.

9. The microchannel slide system of claim 8, further comprising a liquid collection bag release valve positioned between the liquid collection bag and the microchannel slide and adapted to selectively allow the liquid to flow from the liquid collection bag to the microchannel slide.

10. The microchannel slide system of claim 9, further comprising a controller configured to (i) selectively open the liquid collection bag release valve to allow the liquid to flow from the liquid collection bag to the microchannel slide, (ii) selectively actuate the vibrator to mix the received flows of the liquid to create the mixed liquid, and (iii) selectively open the mixing chamber release valve to allow the mixed liquid to flow from the mixing chamber to the imaging chamber.

11. The microchannel slide system of claim 10, wherein the controller is configured to selectively open the mixing chamber release valve after the vibrator has been actuated for the predetermined amount of time.

12. The microchannel slide system of claim 10, wherein the controller is configured to receive an indication of the pressure of the liquid within the liquid collection chamber from the pressure sensor; and
wherein the controller is configured to selectively open the liquid collection bag release valve to allow the liquid to flow from the liquid collection bag to the microchannel slide when the pressure of the liquid within the liquid collection chamber reaches a predetermined threshold.

13. A method of preparing a liquid for imaging, the method comprising:
receiving a liquid into a liquid collection bag from an external source;
opening a liquid collection bag release valve to allow respective flows of the liquid to flow (i) out of the liquid collection bag via two or more output lines, (ii) into respective ones of two or more flow channels defined in a main body of a microchannel slide, and (iii) into a mixing chamber defined in the main body of the microchannel slide, each output line adapted to convey a corresponding flow of the liquid from a respective different location within the liquid collection bag;
actuating a vibrator positioned within or adjacent to the mixing chamber to mix the liquid in the mixing chamber to create a mixed liquid; and
opening a mixing chamber release valve to allow the mixed liquid to flow from the mixing chamber to an imaging chamber defined in the main body of the microchannel slide;
wherein a depth of the imaging chamber is selected to enable imaging of the mixed liquid in the imaging chamber.

14. The method of claim 13, wherein the vibrator is actuated for a predetermined amount of time.

15. The method of claim 13, further comprising:
receiving an indication from a pressure sensor within the liquid collection bag of a pressure of the liquid within the liquid collection bag; and
wherein the liquid collection bag release valve is opened when the pressure of the liquid within the liquid collection bag reaches a predetermined threshold.
